# EUROPEAN PATENT SPECIFICATION

(11) **EP 3 065 391 B1**
(45) Date of publication and mention of the grant of the patent: **27.01.2021**
(21) Application number: 16158336.4
(22) Date of filing: 02.03.2016
(51) Int. Cl.: H04N 5/225, H04N 5/235, H04N 5/232

(54) **AN IMAGE CAPTURING SYSTEM AND METHOD FOR IMAGING CYCLICALLY MOVING OBJECTS**
BILDERFASSUNGSSYSTEM UND VERFAHREN ZUR ABBILDUNG ZYKLISCH BEWEGTER OBJEKTE
SYSTÈME DE CAPTURE D'IMAGE ET PROCÉDÉ D'IMAGERIE D'OBJETS EN MOUVEMENT CYCLIQUE

(30) Priority: 06.03.2015 ZA 201501554
(43) Date of publication of application: 07.09.2016
(73) Proprietor: The Trustees for the Time Being of Junior Barnes Family Trust, Gauteng (ZA)
(72) Inventor: Marcellin, Paul, Sandton, Gauteng (ZA); Mullholland, Matthew, Houtbay (ZA)
(74) Representative: Taor, Simon Edward William

(56) References cited:
- CN-A- 1 554 926
- LUC L?V: "Nyquist sampling theorem: understanding the illusion of a spinning wheel captured with a video camera", PHYSICS EDUCATION, INSTITUTE OF PHYSICS PUBLISHING, BRISTOL, GB, vol. 49, no. 6, 28 October 2014 (2014-10-28), pages 697-705, XP020272033, ISSN: 0031-9120, DOI: 10.1088/0031-9120/49/6/697 [retrieved on 2014-10-28]
- mittechtv: "BLOSSOMS - The Stroboscopic Effect", YouTube, 25 February 2010 (2010-02-25), pages 1-1, XP054976689, Retrieved from the Internet: URL:https://www.youtube.com/watch?v=QgRwDe bcNbk [retrieved on 2016-07-22]
- Jonathan Valvano: "C14 5 Wagon wheel effect", YouTube, 21 December 2013 (2013-12-21), pages 1-1, XP054976691, Retrieved from the Internet: URL:https://www.youtube.com/watch?v=VNftf5 qLpiA [retrieved on 2016-07-22]

## Description

This invention relates broadly to video capture of cyclically moving objects and it relates specifically to an image capturing system and method for imaging cyclically moving objects (e.g., rotating wheels) to achieve a specific or influenced temporal aliasing effect.

The Applicant are familiar with the concept of aliasing in signal processing (http://en.wikipedia.org/wiki/Aliasing, accessed 18 February 2015). Aliasing in the form of temporal aliasing is practically observable when a video camera operating at a particular sampling rate captures a cyclically moving object and the video of the subject shows the object moving at a false speed. This is colloquially known as the wagon-wheel effect (http://en.wikipedia.org/wiki/Wagon-wheel_effect, access 18 February 2015) and more scientifically as the stroboscopic effect (http://en.wikipedia.org/wiki/Stroboscopic_effect, accessed 18 February 2015).

It is specifically this temporal aliasing effect which the Inventors wish to utilise to control display of a cyclically moving object in a video. However, this is difficult because there are two main factors which influence temporal aliasing, namely i) sampling rate of the camera and ii) frequency of the cyclically moving object, are not practically controllable.

Video cameras typically sample at industry-defined sampling rates or frequencies. Video footage intended for television display is usually provided at 24 or 30 FPS (Frames Per Second) or newer HFR (High Frame Rate) at 60 FPS. Some video cameras have adjustable sampling rates, while others have fixed sampling rates. Even if a video camera has an adjustable sampling rate, it might not be possible to adjust it in real-time, or if it is, it may be undesirable to have video captured at continuously varying sampling rates.

Controlling the frequency of the cyclically moving object is even more impracticable. The object may be a wheel of a car or bike, or a rotor of a plane or helicopter (for example). These objects usually cycle or rotate at frequencies dictated by an operation (e.g., speed) of the vehicle to which they are mounted. Fixing the operation of the vehicle to match the frequency of the cyclically moving object to the sampling rate of the camera is highly impractical.

Accordingly, the Inventors desire a system and method which permits control of the temporal aliasing of video captured of a cyclically moving object without needing to adjust the sampling rate of the video camera or the frequency of the cyclically moving object.

The closest disclosures of which the Applicant is aware are as follows:
CA2455114 discloses placement of a rotary mask over a rotating objected, the speed of the rotating mask being controllable (in one embodiment) by an external controller. US2745092 discloses a method of illuminating indicia on a wheel. A strobe light is matched to a period of rotation of the wheel to display a particular number.

US9119266 discloses a handheld strobe light but the frequency of the strobe is not matched to an externally cyclical object.

WO2009133403 discloses downsampling a high framerate could intentionally introduce temporal aliasing effects such as the wagon wheel effect.

CN1554926 discloses an imaging system and method for detecting deflections in a cyclically moving object. The imaging system comprises a camera and a light emitter directed towards the cyclically moving object. The light emitter is operable to project a grid or like defined pattern of light onto the cyclically moving object. A normal axis of the camera is misaligned with a normal axis of the light emitter such that the grid projected by the light emitter is intentionally warped or deformed when captured by the camera. The degree of warping of the grid is indicative of the deflections in the cyclically moving object. The frequency sampling of the camera and the emission frequency of the light emitter are synchronized according to the cycling frequency of the cyclically moving object in order to freeze the image of the object. LUC LEVESQUE: "Nyquist sampling theorem: understanding the illusion of a spinning wheel captured with a video camera", physics education, institute of physics publishing, Bristol, GB, vol. 49, no. 6, 28 October 2014, pages 697-705, XP020272033, ISSN: 0031-9120, DOI: 10.1088/0031-9120/49/6/697 and XP054976691 disclose background theory relating to aliasing.

Accordingly, the invention provides an image capturing system as set out in claim 1.

The control module may be operable to calculate the emission frequency. The control module may be operable to generate a control signal indicative of the calculated emission frequency. The control module may be operable to direct the operation of the light emitter by means of the control signal.

The image capturing system may include a memory module communicatively coupled to, or integrated with, the control module and having stored thereon frequency criteria indicative of how the emission frequency is calculated.

Instead, or in addition, the control module may be operable to receive a user input indicative of a desired operational state, e.g., increase stroboscopic effect, decrease stroboscopic effect, increase emission frequency, decrease emission frequency, etc. The image capturing system may include an input arrangement, e.g., a touchscreen, a slider, or a dial, operable to receive the user input.

The sensor may be discreet from the camera, e.g., being an external device. The sensor may be integral with the camera, e.g., including components associated with the camera sensor.

The sensor may be an EM (Electro Magnetic) transceiver, e.g., a laser/LIDAR or radar. The sensor may resemble a speed gun, e.g., those used in traffic enforcement, optionally with suitable modifications. Instead of measuring the speed of the cyclically moving object directly, the image capturing system may be configured to measure a linear speed of a vehicle carrying the cyclically moving object and then calculate a rotational speed of the cyclically moving object based on the speed of the vehicle. This may still be defined as detecting the speed of the cyclically moving object for the purposes of this specification.

The sensor may employ an external telemetry or timing signal, e.g., being GPS (Global Positioning System) based. For example, using a GPS reading from the sensor, the control module may be operable to calculate a speed of a vehicle carrying the cyclically moving object. If the cyclically moving object is a wheel, the control mobile may calculate the cycling frequency as a function of the speed of the vehicle and a diameter of the wheel.

The light emitter may be discreet from, or integrated with, the camera. The light emitter may be a lens ring light which is mounted or mountable around the lens of the camera close to a focus axis of the camera lens.

The image may contain any information practically attachable to the cyclically moving object. The image may include technical information, artistic representations, or advertising/promotional material.

The communicative coupling between the various components may be wired or wireless and may employ known communication techniques.

The control module may be embodied by a computer processer. It is to be understood that the computer processor may be one or more microprocessors, controllers, Digital Signal Processors (DSPs), or any other suitable computing device, resource, hardware, software, or embedded logic.

The invention extends to a method of imaging cyclically moving objects as set out in claim 8.

The method may be implemented by the system as defined above.

The method may include receiving a user input indicative of frequency criteria. The user input may be received via an input arrangement.

The invention extends to a non-transitory computer-readable as set out in claim 10.

The invention will now be further described, by way of example, with reference to the accompanying diagrammatic drawings.

In the drawings:
FIG. 1 shows a schematic view of an image capturing system, in accordance with the invention;
FIG. 2 shows a flow diagram of a method of imaging cyclically moving objects, in accordance with the invention; and
FIG. 3 shows a diagrammatic representation of a computer system within which a computer program, for causing the computer system to perform any one or more of the methodologies discussed herein, may be executed

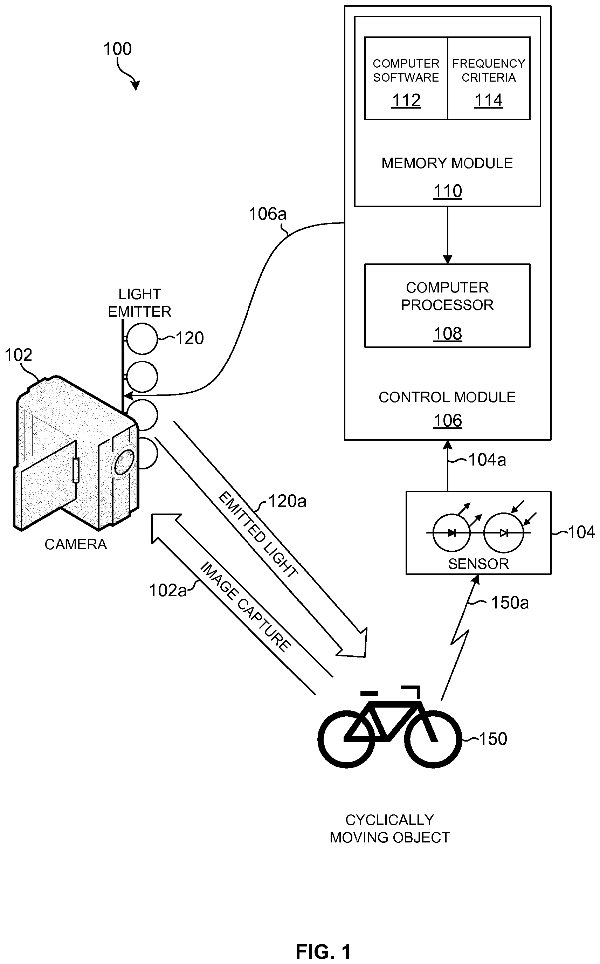

FIG. 1 shows an example image capturing system 100, in accordance with the invention. The system 100 includes a video camera 102. The video camera 102 may be a conventional or prior art video camera and needs no specific technical modification to operate in accordance with the invention. The video camera 102 is operable, in conventional fashion, to capture a series of images at a defined or definable sampling frequency 102a. The sampling frequency 102a may, for example, be 24 FPS. The sampling frequency 102a is typically fixed (although may be configurable in some models of video cameras).

The video camera 102 is directed towards a cyclically moving object 150. In this example, the cyclically moving object 150 is a bicycle, or more specifically, a bicycle wheel, but it will be understood that the cyclically moving object 150 may be any object which cycles or reciprocates, whether rotationally, linearly, or other. The bicycle wheel 150 has a cycling frequency 150a which typically is dynamic and thus can vary in accordance with the state of the bicycle, and more specifically, the speed of the bicycle. The cycling frequency 150a may vary continuously and in real-time.

A sensor 104 is directed towards the cyclically moving object 150, that is, the bicycle wheel 150. The sensor 104 may be technically very similar to a handheld speed gun which could be laser/LIDAR- or radar- based. The sensor 104 may be static (e.g., tripod-mounted), handheld, or automatically controllable (e.g., with electrical motors to adjust its directionality). Regardless of the specific technical configuration of the sensor 104, it is operable to detect the cycling frequency 150a of the bicycle wheel 150. In a different implementation, the sensor 140 may be operable to detect a speed of the bicycle from which the cycling frequency 150a of the bicycle wheel 150 can be calculated.

The cycling frequency 150a may be in cycles per second or Hz. The sensor 104 is operable to generate a frequency reading 104a indicative of the detected cycling frequency 150a. In this example, the sensor 104 is a discrete component, but in another example, it could be integrated with another component, e.g., the video camera 102.

The image capturing system 100 has a control module 106 to direct the operation of the image capturing system 100. The control module 106 is in the form of a suitably programmed computer processor 108 and may be housed in a portable computer, tablet, or some other computing device. The control module 106 includes a computer-readable medium in the form of a memory module 110 communicatively coupled to the computer processor 108. The memory module 110 has stored thereon computer software 112 which, when executed, directs the operation of the computer processor 108. Also stored on the memory module 110 are frequency criteria 114.

The image capturing system 100 has a light emitter 120 which is communicatively coupled to the control module 106. The control module 106 is operable to direct the operation of the light emitter 120 by means of a control signal io6a in accordance with the frequency criteria 114. The light emitter 120 is operable to pulse or strobe light at an emission frequency 120a. The operative emission frequency range of the light emitter 120 may be from 0.1 Hz to 10 kHz but is usually closer to the sampling frequency, e.g., 10-100 Hz.

To render the image capturing system 100 sufficiently portable, it may include a battery or other mobile power source (not illustrated).

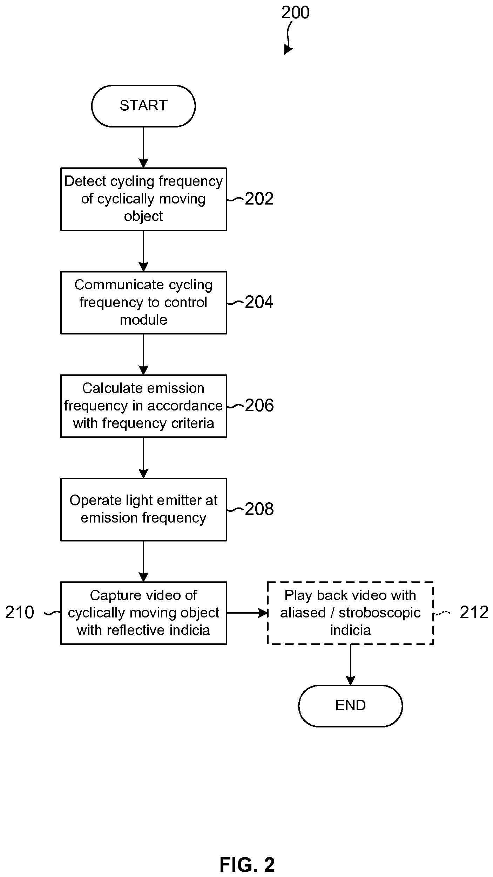

FIG. 2 illustrates a method 200 of imaging cyclically moving objects, in accordance with the invention. In this example, the method 200 is described with reference to the image capturing system 100; however, it is to be appreciated that the method 200 may be implemented by a different system (not illustrated) and the image capturing system 100 may be configured to implement a different method (not illustrated).

Optionally, the bicycle wheel 150 can be specially configured prior to implementing the method 200. This is not necessarily required but may serve to enhance the effect of the light emitter 120. For example, reflective indicia can be placed on the bicycle wheel 150. The indicia may be made using, for example, Scotchlite™ reflective material. The indicia may be for advertising, e.g., configured to show logos, slogans, product information, or they may merely be intended to look visually striking or appealing.

The bicycle wheel 150 is then operated, that is to say, the bicycle is ridden and the bicycle wheel 150 rotates. The sensor 104 is directed towards the bicycle wheel 150 and detects (at block 202) the cycling frequency 150a. A cycle is typically defined as a full revolution, but could be defined as, say, a third of a revolution if the indicia are divided into three rotationally symmetrical sectors. Specifically, in the case of wheels, the cyclically moving object might not actually be the wheel itself but a sector defined by the wheel between spokes of the wheel. Accordingly, a wheel with 10 spokes could define five or 10 cyclically moving objects.

In a basic proof of concept experiment, the Inventors approximated the sensor 104 about 6 m from the bicycle wheel 150 and found it to detect the cycling frequency 150a perfectly accurately.

The sensor 104 generates a frequency reading 104a indicative of the detected cycling frequency 150a which is communicated (at block 204) to the control module 106. The control module 106 in turn calculates (at block 206) the emission frequency 120a in accordance with the frequency criteria 114 (further described below) and generates the control signal io6a indicative of the emission frequency 120a. The control module 106 outputs the control signal 106a to the light emitter 120 thereby to operate the light emitter 120 at the calculated emission frequency 120a.

In the proof of concept experiment, the Inventors used a ring light mounted around, but out of the field of view of, a lens of the camera 102. They found that this worked well without the emitted light directly interfering with the captured images - there was no observable peripherally lighting interference.

The camera 102 is then operated as if in a conventional setup and captures (at block 210) a series of images - including the bicycle wheel 150 - to constitute a video. However, when the video is played back (at block 212) or broadcast and played back at a remote location, the aliasing effect of the bicycle wheel 150 is influenced by the flashing light emitted by the light emitter 120 at the emission frequency 120a. That is not to say that there will not be any aliasing effect - it may merely be different to what it would have been had there been no light emitter 120.

In the proof of concept experiment, the Inventors positioned the camera about 6 m away from the bicycle wheel 150 and set the intensity level of the light emitter 120 to a low setting which was sufficient to illuminate the indicia on the bicycle wheel 150. The precise wattage may depend on the light emitter 120 being used, with LED-based light emitters typically requiring lower power input than a gas-filament strobe-based light emitter.

In the proof of concept experiment, the Inventors observed that defining the frequency criteria as the simple rule: emission frequency 106a = cyclic frequency 150a yielded a rotationally stationary display of the indicia (that is, there is no aliasing or the bicycle wheel 150 is stroboscopically neutral).

The Inventors then went further and configured a manually controllable input arrangement (e.g., a dial) to the control module 106. The input arrangement received a user input indicative of a relative adjustment to the emission frequency 120a. In other words, the rule became emission frequency 106a = cyclic frequency 150a ± user-defined offset. If the user input was o or neutral, the indicia would remain stationary. If the user input was representative of an increase, then the indicia (when replayed in the video) appear to accelerate or start moving forward slowly. Conversely, if the user input represented a decrease, then the indicia (when replayed in the video) appear to decelerate or start moving backwards slowly. The greater the level of user input, the greater the corresponding change. In this manner, the aliasing of the bicycle wheel 150 in the video can be influenced and even specifically controlled. The Inventors noticed that certain settings even caused what appeared to be animations of the bicycle wheel 150 or of the indicia thereon.

In the experiment, the Inventors noted that it was possible to achieve an emission frequency 120a which was not even observable to the human eye, appearing simply to be a steady light. The Inventors speculate that this would be visually acceptable to bystanders and would not cause visual discomfort. However, the effect on the camera 102 (due to the sampling frequency), and hence on the replayed video, is still noticeable.

The Inventors noticed that the light emitter 120 functioned in both daylight and artificial (fluorescent) light. Further, the bicycle wheel 150 or the indicia did not blur or morph in the video but showed sharply with appropriate frequency criteria 114. The Inventors believe that the image capturing system 100 can allow the indicia to be displayed clearly in the video (e.g., seen by TV watchers) while allowing the indicia to remain unseen in real life (e.g., not seen by spectators or sporting participants).

By way of development, the Inventors speculate that using multiple types of emitted light (e.g., different colours) could enable multiple images or indicia to be displayed. The Inventors also envisage that a video post-processing algorithm could be developed to enhance the bicycle wheel 150 (or other cyclically moving object 150), even in real-time. The indicia may thus serve as a reference to enable post-processing techniques.

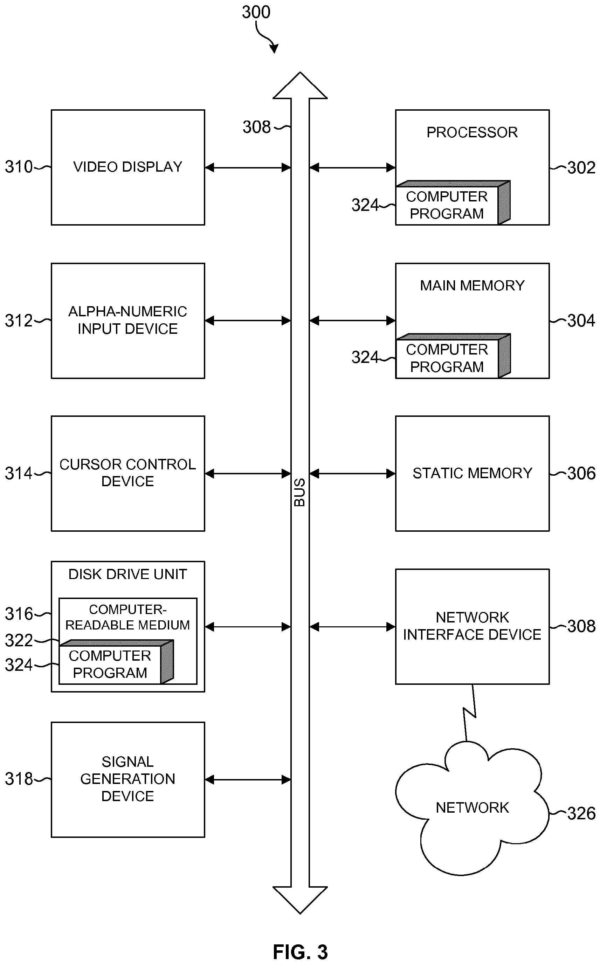

FIG. 3 shows a diagrammatic representation of a computer system 300 within which a set of instructions, for causing the computer system 300 to perform any one or more of the methodologies described herein, may be executed. In a networked deployment, the computer system 300 may operate in the capacity of a server or a client machine in server-client network environment, or as a peer machine in a peer-to-peer (or distributed) network environment.

The computer system 300 may be a personal computer (PC), a tablet PC, a set-top box (STB), a Personal Digital Assistant (PDA), a cellular telephone, a tablet, a web appliance, a network router, switch or bridge, or any computer system 300 capable of executing a set of instructions (sequential or otherwise) that specify actions to be taken by that computer system 300. Further, while only a single computer system 300 is illustrated, the term "computer" shall also be taken to include any collection of computers that individually or jointly execute a set (or multiple sets) of instructions to perform any one or more of the methodologies discussed herein.

The example computer system 300 includes a computer processor 302 (e.g., a central processing unit (CPU), a graphics processing unit (GPU) or both, a main memory 304 and a static memory 306, which communicate with each other via a bus 308. The computer system 300 may further include a video display unit 310 (e.g., a liquid crystal display (LCD)). The computer system 300 also includes an alphanumeric input device 312 (e.g., a keyboard), a user interface (UI) navigation device 314 (e.g., a mouse or touchscreen), a disk drive unit 316, a signal generation device 318 (e.g., a speaker) and a network interface device 320.

The disk drive unit 316 includes a computer-readable medium 322 on which is stored one or more sets of instructions and data structures (e.g., computer software 324) embodying or utilised by any one or more of the methodologies or functions described herein. The computer software 324 may also reside, completely or at least partially, within the main memory 304 and/or within the processor 302 during execution thereof by the computer system 300, the main memory 304 and the processor 302 also constituting computer-readable media.

The computer software 324 may further be transmitted or received over a network 326 via the network interface device 320 utilizing any one of a number of well-known transfer protocols (e.g., HTTP, FTP).

While the computer-readable medium 322 is shown in an example embodiment to be a single medium, the term "computer-readable medium" should be taken to include a single medium or multiple media (e.g., a centralised or distributed database, and/or associated caches and servers) that store the one or more sets of instructions. The term "computer-readable medium" shall also be taken to include any medium that is capable of storing, encoding or carrying a set of instructions for execution by the computer system 300 and that cause the computer system 300 to perform any one or more of the methodologies of the present embodiments, or that is capable of storing, encoding or carrying data structures utilized by or associated with such a set of instructions. The term "computer-readable medium" shall accordingly be taken to include, but not be limited to, solid-state memories and optical and magnetic media.

The image capturing system 100 may include at least some of the components of the computer system 300.

## Claims

1. An image capturing system (100) which includes a camera (102) having a sampling frequency (102a) and being operable to capture a series of images to form a video of a cyclically moving object (150) which cycles at a cycling frequency (150a), the sampling and cycling frequencies (102a, 150a) not being related,
wherein the sampling frequency (202a) is fixed and wherein the image capturing system (100) includes:
a sensor (104) operable to detect the cycling frequency (150a) of the cyclically moving object (150) and to generate a frequency reading (104a) indicative of the detected cycling frequency (150a);
a control module (106) communicably coupled to the sensor (104) and operable to receive from the sensor (104) the frequency reading (104a);
reflective indicia provided on the cyclically moving object (150), the indicia being at least more reflective than a remainder of the cyclically moving object (150); and
a light emitter (120) operable to emit pulses of light at a controllable emission frequency (120a), the light emitter (120) being communicatively coupled to the control module (106) which is operable to control the emission frequency (120a) of the light emitter (120) based on the frequency reading (104a), wherein the emission frequency (120a) is one of: i) matched to the detected cycling frequency (150a), ii) a function of the detected cycling frequency (150a), the function being a multiple, harmonic, or overtone, or iii) matched to the detected cycling frequency (150a) with user-defined offset, thereby to influence the temporal aliasing of the indicia provided on the cyclically moving object (150) as captured in the video.

2. The image capturing system (100) as claimed in claim 1, in which the control module (106) is operable to:
calculate the emission frequency;
generate a control signal (106a) indicative of the calculated emission frequency; and
direct the operation of the light emitter (120) by means of the control signal (106a).

3. The image capturing system (100) as claimed in any one of claims 1-2, which includes a memory module (110) communicatively coupled to, or integrated with, the control module (106) and having stored thereon frequency criteria (114) indicative of how the emission frequency is calculated.

4. The image capturing system (100) as claimed in any one of claims 1-3, in which the control module (106) is operable to receive a user input indicative of a desired operational state.

5. The image capturing system (100) as claimed in any one of claims 1-4, in which:
the sensor (104) is discreet from the camera (102); or
the sensor (104) is integrated with the camera (102).

6. The image capturing system (100) as claimed in any one of claims 1-5, in which the sensor (104) employs an external telemetry or timing signal.

7. The image capturing system (100) as claimed in any one of claims 1-6, in which the light emitter (120) is a lens ring light which is mounted or mountable around the lens of the camera (102) close to a focus axis of the camera lens.

8. A method (200) of imaging a cyclically moving object having a cycling frequency (150a) using a camera having a sampling frequency (102a), wherein the method (200) includes:
detecting (202), by a sensor, the cycling frequency (150a) of the cyclically moving object having reflective indicia provided thereon, the indicia being at least more reflective than a remainder of the cyclically moving object (150) and generating, by the sensor, a frequency reading indicative of the detected cycling frequency;
communicating (204) the frequency reading to a control module which is communicatively coupled to the sensor;
calculating (206), by the control module, an emission frequency of a light emitter in accordance with a frequency criteria (114) which is one of: i) the emission frequency is matched to the detected cycling frequency (150a), ii) the emission frequency is a function of the detected cycling frequency (150a), the function being a multiple, harmonic, or overtone, or iii) the emission frequency is matched to the detected cycling frequency (150a) with user-defined offset;
operating (208) the light emitter to emit pulses of light at the emission frequency, the light emitter being communicatively coupled to the control module which is operable to control the emission frequency of the light emitter based on the frequency reading; and
capturing (210), by the camera, a series of images to form a video of the cyclically moving object, the sampling and cycling frequencies (102a, 150a) not being related and the sampling frequency (102a) being fixed, thereby to influence the temporal aliasing of the indicia provided on the cyclically moving object as captured in the video.

9. The method (200) as claimed in claim 8, which is implemented repetitively and continually, that is, continually detecting the cycling frequency and adjusting the emission frequency accordingly.

10. A non-transitory computer-readable medium (110) having stored thereon a computer program which, when executed by a computer processor of an image capturing system according to claim 1, causes the processor to perform the method as claimed in any one of claims 8-9.

## Patentansprüche

1. Ein Bilderfassungssystem (100), das eine Kamera (102) mit einer Sampling-Frequenz (102a) einschließt, und verwendet werden kann, um eine Reihe von Bildern zu erfassen, um daraus ein Video eines sich zyklisch bewegenden Objekts (150) zu erstellen, welches sich im Kreislauf bei einer Zyklusfrequenz (150a) bewegt. Die Sampling- und die Zyklusfrequenzen (102a, 150a) stehen nicht in Beziehung, wobei die Sampling-Frequenz (202a) festgelegt ist und wobei das Bilderfassungssystem (100) folgendes einschließt:
einen Sensor (104), der verwendet werden kann, die Zyklusfrequenz (150a) des sich zyklisch bewegenden Objekts (150) festzustellen und eine Frequenz-Ablesung (104a) zu erzeugen, die auf die festgestellte Zyklusfrequenz (150a) schließen lässt;
ein Steuermodul (106), das kommunizierbar mit dem Sensor (104) gekoppelt ist und verwendet werden kann, um vom Sensor (104) die Frequenz-Ablesung (104a) zu empfangen;
reflektierende Indizien auf dem sich zyklisch bewegenden Objekt (150), wobei die Indizien zumindest reflektierender sind als ein Rest des sich zyklisch bewegenden Objekts (150); und
ein Lichtstrahler (120), der mit einer steuerbaren Sendefrequenz (120a) Lichtimpulse ausstrahlen kann, wobei der Lichtstrahler (120) kommunizierend an das Steuermodul (106) gekoppelt ist, das die Sendefrequenz (120a) des Lichtstrahlers (120) steuern kann, basiert auf die Frequenz-Ablesung (104a), wobei die Sendefrequenz (120a) eine der folgenden ist:
i) auf die festgestellte Zyklusfrequenz (150a) abgestimmt,
ii) eine Funktion der festgestellten Zyklusfrequenz (150a), wobei die Funktion eine Mehrfach-, Oberschwingungs- oder Obertonfunktion ist, oder
iii) auf die festgestellte Zyklusfrequenz (150a) mit benutzerdefiniertem Versatz abgestimmt, um dadurch das zeitliche Aliasing der vorgesehenen Indizien auf dem sich zyklisch bewegendem Objekt (150), wie im Video erfasst, zu beeinflussen.

2. Das Bilderfassungssystem (100) wie in Anspruch 1 beansprucht, in dem das Steuermodul (106) verwendet werden kann um:
die Sendefrequenz zu berechnen;
ein Steuersignal (106a) zu erzeugen, das auf die berechnete Sendefrequenz hinweist; und
die Funktion des Lichtstrahlers (120) durch das Steuersignal (106a) zu lenken.

3. Das Bilderfassungssystem (100), wie in irgendeinem der Ansprüche 1-2 beansprucht, das ein Speichermodul (110) enthält, das kommunizierend an das Steuermodul (106) gekoppelt, oder mit ihm integriert, ist, und darauf Frequenz-Kriterien (114) gespeichert hat, die darauf hinweisen, wie die Sendefrequenz berechnet wird.

4. Das Bilderfassungssystem (100), wie in irgendeinem der Ansprüche 1-3 beansprucht, in dem das Steuermodul (106) verwendet werden kann, um eine Benutzer-Eingabe zu empfangen, die auf eine gewünschte Betriebsbereitschaft hinweist.

5. Das Bilderfassungssystem (100), wie in irgendeinem der Ansprüche 1-4 beansprucht, in dem:
der Sensor (104) diskret von der Kamera ist (102); oder
der Sensor (104) in die Kamera (102) integriert ist.

6. Das Bilderfassungssystem (100) wie in irgendeinem der Ansprüche 1-5 beansprucht, bei dem der Sensor (104) ein externes Telemetrie- oder Zeitsteuerungssignal verwendet.

7. Das Bilderfassungssystem (100), wie in irgendeinem der Ansprüche 1-6 beansprucht, bei dem der Lichtstrahler (120) ein Objektiv-Ringlicht ist, das um das Objektiv der Kamera (102) nahe einer Fokus-Achse des Kamera-Objektivs montiert ist oder montiert werden kann.

8. Ein Verfahren (200) zur Bilderfassung eines sich zyklisch bewegenden Objekts das eine Zyklusfrequenz (150a) hat, und ein Kamera mit einer Sampling-Frequenz (102a) gebraucht, bei der das Verfahren (200) Folgendes beinhaltet:
die Feststellung (202), durch einen Sensor, der Zyklusfrequenz (150a) des sich zyklisch bewegenden Objekts mit reflektierenden Indizien die darauf vorgesehen sind, wobei die Indizien mindestens reflektierender sind als ein Rest des sich zyklisch bewegenden Objekts (150) und das Generieren, durch den Sensor, einer Frequenz-Ablesung, die auf die festgestellte Zyklusfrequenz hinweist;
die Kommunikation (204) der Frequenz-Ablesung an ein Steuermodul, das kommunizierend an den Sensor gekoppelt ist;
die Berechnung (206), durch das Steuermodul, einer Sendefrequenz eines Lichtstrahlers nach einem Frequenzkriterium (114), das eines ist von:
i) die Sendefrequenz ist mit der festgestellten Zyklusfrequenz (150a) abgestimmt,
ii) die Sendefrequenz ist eine Funktion der festgestellten Zyklusfrequenz (150a), wobei die Funktion eine Mehrfach-, Oberschwingungs- oder Obertonfunktion ist, oder
iii) die Sendefrequenz ist mit der festgestellten Zyklusfrequenz (150a) mit benutzerdefiniertem Versatz abgestimmt;
die Bedienung (208) des Lichtstrahlers, um Lichtimpulse bei der Sendefrequenz zu senden, wobei der Lichtstrahler kommunizierend an das Steuermodul gekoppelt ist, das die Steuerung der Sendefrequenz des Lichtstrahlers auf Grund der Frequenz-Ablesung bedienen kann; und
die Erfassung (210), durch die Kamera, einer Reihe von Bildern, um ein Video des sich zyklisch bewegenden Objekts zu erstellen, wobei die Sampling- und Zyklusfrequenzen (102a, 150a) nicht in Beziehung stehen, und die Samplingfrequenz (102a) fixiert ist, um dadurch das zeitliche Aliasing der vorgesehenen Indizien auf dem sich zyklisch bewegenden Objekt, wie im Video erfasst, zu beeinflussen.

9. Das Verfahren (200) wie in Anspruch 8 beansprucht, das wiederholt und kontinuierlich eingesetzt wird, d. h., das kontinuierlich die Zyklusfrequenz feststellt und die Sendefrequenz entsprechend anpasst.

10. Ein nicht-transitorischer computerlesbarer Datenträger (110), auf dem ein Computerprogramm gespeichert ist, das, wenn es von einem Computer-Prozessor eines Bilderfassungssystems nach Anspruch 1 ausgeführt wird, den Prozessor dazu veranlasst, das Verfahren so auszuführen, wie es in irgendeinem der Ansprüche 8-9 beansprucht wird.

## Revendications

1. Un système de capture d'image (100) qui inclut une caméra (102) ayant une fréquence de capture (102a) et qui peut être opérée pour capturer une série d'images pour former une vidéo d'un objet mouvant de manière cyclique (150) avec des cycles de fréquence de mouvement cyclique (150a), les fréquences de capture (102a) et de mouvement cyclique (150a) étant indépendants l'un de l'autre, où la fréquence de capture (202a) est fixée et où le système de capture d'image (100) inclut :
un senseur (104) qui peut être opéré pour détecter la fréquence de mouvement cyclique (150a) de l'objet se mouvant de manière cyclique (150) et pour générer une lecture de fréquence indicative de la fréquence de mouvement cyclique (150a) détectée ;
un module de contrôle (106) couplé de manière communicante au senseur (104) et qui peut être opéré pour recevoir du senseur (104) le lecture de fréquence (104a) ;
Des signes distinctifs réfléchissants appliquées sur l'objet mouvant de manière cyclique (150), les signes distinctifs étant au moins plus réfléchissants que le restant de l'objet mouvant de manière cyclique (150) ; et
un émetteur de lumière (120) qui peut être opéré pour émettre des pulsations lumineuses à une fréquence d'émission controllable (120a), l'émetteur de lumière (120) étant couplé de manière communicante au module de contôle (106) qui peut être opéré pour controller la fréquence d'émission (120a) de l'émetteur de lumière (120) sur base de la lecture de fréquence (104a), l'émission de frquence (120a) étant soit:
i) alignée sur la fréquence du mouvement cyclique détectée (150a)
ii) une fonction de la fréquence du mouvement cyclique détectée (150a), la fonction étant un multiple, ou harmonique, ou
iii) alignée sur la fréquence du mouvement cyclique détectée (150a) avec un décalage défini par l'utilisateur afin d'influencer l'aliasing temporel des indications appliquées sur l'objet se mouvant de manière cyclique (150) telles que capturées sur la vidéo

2. Le système de capture d'image (100) tel que revendiqué dans la revendication 1 dans lequel le module de contrôle peut être opéré pour :
calculer la fréquence d'émission ;
Générer un signal de contrôle (106a) indiquant la fréquence d'émission calculée ; et
Diriger l'opération de l'émetteur de lumière (120) par le moyen du signal de contrôle (106a).

3. Le système de capture d'image (100) tel que revendiqué dans quelconque des revendications 1-2, qui inclut un module de mémoire (110) couplé de manière communicante à, ou intégré dans, le module de contrôle (106) et dans lequel sont enregistrés les critères de fréquence (114) indiquant comment la fréquence d'émission est calculée.

4. Le système de capture d'image (100) tel que revendiqué dans quelconque des revendications 1-3, dans lequel le module de contrôle (106) peut être opéré pour recevoir une instruction de l'utilisateur sur l'état d'opération désiré

5. Le système de capture d'image (100) tel que revendiqué dans quelconque des revendications 1-4, dans lequel
Le senseur (104) est distinct de la caméra (102) ; ou
Le senseur (104) est intégré à la caméra (102).

6. Le système de capture d'image (100) tel que revendiqué dans quelconque des revendications 1-5, dans lequel le senseur (104) utilise une télémétrie externe ou un signal de synchronisation.

7. Le système de capture d'image (100) tel que revendiqué dans quelconque des revendications 1-6, dans lequel l'émetteur de lumière (120) est une source de lumière annulaire pour objectif qui est montée ou montable autour de l'objectif de la caméra (102) à proximité de l'axe de mise au point de l'objectif.

8. Une méthode (200) d'imagerie pour objets mouvant de manière cyclique ayant une fréquence du mouvement cyclique (150a) utilisant une caméra ayant une fréquence de capture (102a), où la méthode (200) inclut :
la détection (202) par un senseur de la fréquence du mouvement cyclique (150a) de l'objet se mouvant de manière cyclique sur lequel sont appliquées des signes distinctifs réfléchissants, les signes distinctifs étant au moins aussi réfléchissants qu'une partie restante de l'objet se mouvant de manière cyclique (150) and qui génère, par le senseur, une lecture de fréquence indiquant la fréquence du mouvement cyclique détectée
la communication (204) de la lecture de fréquence à un module de contrôle qui est couplé au senseur de manière communicantes ;
le calcul (206) par utilisation du module de contrôle, d'une fréquence d'émission d'un émetteur de lumière basé sur un critère de fréquence qui est soit :
i) la fréquence d'émission est alignée à la fréquence du mouvement cyclique détectée (150a),
ii) la fréquence d'émission est une fonction de la fréquence de cycle détectée (150a), la function étant un multiple, ou harmonique, ou
iii) la fréquence d'émission est alignée sur fréquence du mouvement cyclique détectée (150a) avec un décalage déterminé par l'utilisateur.
L'opération (208) de l'émetteur de lumière pour émettre des impulsions de lumière à la fréquence d'émission, l'émetteur de lumière étant couple de manière communicante au module de contrôle qui peut être opéré pour contrôler la fréquence d'émission de l'émetteur de lumière sur base de la lecture de fréquence ; et
La capture (220) par la caméra d'une série d'images pour former une vidéo du l'object se miyvant de manière cyclique, the fréquences de capture et du mouvement cyclique (102a, 150a) n'étant pas liées et la fréquence de capture (102a) étant fixe, de cette manière influençant le crénelage temporel des indications appliquées sur l'objet mouvant de manière cyclique telle que capturés par la vidéo

9. La méthode (200) telle que revendiquée dans la revendication 8, qui est implémentée de manière répétée et continue, c'est-à-dire détectant de manière continue la fréquence de cycle et ajustant la fréquence d'émission en conséquence

10. Un support non transitoire et lisible par ordinateur (110) ayant enregistré un programme informatique qui, quand il est exécuté par un processeur informatique d'un système de capture d'image tel que décrit dans la revendication 1, cause le processeur à exécuter la méthode revendiquée dans quelconque des revendications 8-9
